(19) Europäisches Patentamt / European Patent Office / Office européen des brevets

(11) **EP 2 679 349 A1**

(12) **EUROPEAN PATENT APPLICATION**

(43) Date of publication:
**01.01.2014 Bulletin 2014/01**

(51) Int Cl.:
**B25J 7/00** *(2006.01)*    **B25J 17/02** *(2006.01)*

(21) Application number: **12174050.0**

(22) Date of filing: **28.06.2012**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(71) Applicant: **University College Cork Cork City (IE)**

(72) Inventor: **The designation of the inventor has not yet been filed**

(74) Representative: **Purdylucey Intellectual Property 6-7 Harcourt Terrace Dublin 2 (IE)**

(54) **Compliant parallel manipulator system**

(57)    The invention provides a Compact XYZ Compliant Parallel Manipulator with Well-Constrained Parasitic Rotations. The invention provides a compliant parallel manipulator system comprising: a motion stage controlled by three linear actuators, mounted on a base adapted to produce three output translations, characterised by three leg support portions, each leg comprising a compliant active P joint, connected to the base and adapted to be actuated by a linear actuator, and a compliant passive PPRR chain, connected to the motion stage.

**Figure 5**

**Description**

**Field of the Invention**

The invention relates to a compliant parallel mechanism/manipulator system and method.

**Background to the Invention**

Compliant parallel mechanisms/manipulators (CPMs) transmit motion/load by the deformation of their compliant members and belong to a class of parallel manipulators. CPMs benefit from the eliminated backlash and friction, no need for lubrication, reduced wear and noise, and monolithic configuration, etc. They have been used in many emerging applications such as scanning tables, bio-cell injectors, nano-positioners, and etc.

In the design of CPMs for high-precision (nano-positioning) motion stages, good performance characteristics have been specified along with the nanometric motion quality (<10nm) in terms of motion repeatability, accuracy (lack of error), and resolution (minimum incremental motion). These good characteristics include: 1) large range of motion along the desired directions (>1mm) (also large desired motion), 2) inherently well-constrained parasitic error motion (the minimal undesired motion along the degrees of constraint), 3) minimal cross-axis coupling (also output-decoupling that is the minimal undesired motion along other degrees of freedom), 4) maximal actuator isolation (also input-decoupling that is the minimal transverse motion of the actuator), 5) minimal lost motion (the minimal displacement difference between the actuator and the motion stage), 6) maximal drive stiffness (the maximal overall stiffness between the point of actuation and the motion stage), 7) low thermal and manufacturing sensitivities, 8) compactness of the configuration, 9) minimal number of the geometrical parameters (for example using identical modules), 10) low cost, and 11) desired dynamic performance (such as high bandwidth and no uncontrollable mass).

Conventional CPMs suffer from the problem of parasitic motion. In 3-legged XYZ compliant mechanisms with distributed compliance, undesired parasitic rotation always accompanies its primary translation inherently if no suitable measure is taken, which adversely affect the accuracy of positioning. For example, a common used parallelogram flexure mechanism produces a transverse primary motion caused by the force acting at the tip of the flexure with the consequence that rotation compensation is needed to maintain a zero rotation at the tip. This issue of parasitic rotation is one of the shortcomings of the compact serial XYZ flexure stage as disclosed in US patent Number US4,635,887 by Martock Design Limited.

In addition, the 6-legged (fully symmetrical) arrangement fails to come true to better constrain the parasitic rotation for the kinematically decoupled XYZ CPMs with distributed compliance since the arrangement is more complex and bulkier, and an auxiliary leg is not able to be added in the vertical direction (usually the Z-axis) for symmetric arrangement in order to save more space for the motion stage.

Large range of motion is the most challenging issue in compliant mechanisms, and is generally affected by the following factors: a) system size (or beam length), b) beam thickness, c) material selection (related to high yield strength/ Young's Modulus ratio), d) linear actuator, and e) conceptual-level configuration design. The last factor is the most effective way to raise the motion range by using the distributed-compliance and/or multi-level modules for given material and actuators since enlarging the length of beams can make the configuration bulky, and reducing the thickness of beams may result in the decrease of stiffness significantly and other issues such as manufacturability. In addition, the number of non-controllable motion mass should be reduced from the good dynamics point of view.

Other examples of compliant parallel mechanisms/manipulators disclosed in the art include:

1. Li, Y., Xu, Q., 2011, "A Totally Decoupled Piezo-Driven XYZ Flexure Parallel Micropositioning Stage for Micro/ Nanomanipulation", IEEE Transactions on Automation Science and Engineering. Vol. 8(2):265-279.
2. Yue, Y., Gao, F., Zhao, X., and Ge, Q., 2010, "Relationship among Input-Force, Payload, Stiffness and Displacement of a 3-DOF Perpendicular Parallel Micro-Manipulator", Mechanism and Machine Theory, Vol.45 (5):756-771.
3. Awtar, S., and Ustick, J., and Sen, S., 2011, "An XYZ Parallel Kinematic Flexure Mechanism with Geometrically Decoupled Degrees of Freedom", Proceedings of the ASME 2011 International Design Engineering Technical Conferences & Computers and Information in Engineering Conference, August 29-31, 2011, Washington, DC, USA. D ETC2011- 47713.
4. Yun, Y., Li, Y., 2011, "Optimal Design of a 3PUPU Parallel Robot with Compliant Hinges for Micromanipulation in a Cubic Workspace", Robotics and Computer-Integrated Manufacturing, Vol. 27(6):977-985.

It is therefore an object of the invention to provide a compliant parallel manipulator system and method to overcome at least one of the above mentioned problems.

## Summary of the Invention

According to the invention there is provided, as set out in the appended claims, a compliant parallel manipulator system comprising:

a motion stage controlled by three linear actuators, mounted on a base adapted to produce three output translations, characterised by
three leg support portions, each leg comprising a compliant active P joint, connected to the base and adapted to be actuated by a linear actuator, and a chain connected to the motion stage.

The invention provides a Compact XYZ Compliant Parallel Manipulator with Well-Constrained Parasitic Rotations.

The invention provides at least three embodiments of 3-legged XYZ CPMs with distributed compliance, manual operated, large range of motion, and high-bandwidth, using different strategies.

The system and method of the invention comprises the following advantages:

1) Improved accuracy of positioning due to the unique minimised parasitic rotations by only using three identical compliant legs;
2) Compact configuration and small size due to the use of embedded design;
3) Easy control through the decoupled design;
4) Easy manufacturability through the existing manufacturing technologies such as EDM;
5) Extensive applications especially large range of motion and high bandwidth required without stress concentration; and
6) Nanometric motion quality due to the eliminated backlash, friction, lubrication and etc.

In one embodiment each primary output translation is only affected by the actuation force from the linear actuator along the same line of direction.

In one embodiment at least one sensor to measure input and/or output displacements.

In one embodiment each actuated P joint is arranged substantially perpendicular to a passive PPRR plane in each leg.

In one embodiment the system comprises a kinematically decoupled 3-PPPRR translational parallel manipulator (TPM).

In one embodiment the chain comprises a compliant passive PPRR chain.

In another embodiment of the invention there is provided a compliant parallel manipulator system comprising:

a motion stage controlled mounted on a base and adapted to produce three output translations,
characterised by
three leg support portions, each leg comprising a compliant active P joint, connected to the base and adapted to be actuated by a linear actuator, and a chain connected to the motion stage.

## Brief Description of the Drawings

The invention will be more clearly understood from the following description of an embodiment thereof, given by way of example only, with reference to the accompanying drawings, in which:-

Figure 1 illustrates a 3-PPPRR embedded XYZ CPM with stiffness centre overlapping, according to one embodiment of the invention;
Figure 2 illustrates a 3-PPPRR embedded XYZ CPM with well-constrained cross-axis coupling according to another embodiment of the invention;
Figure 3 illustrates Real models for EDM fabricating each leg: (a) large-range 3-PPPRR XYZ CPM; and (b) high-bandwidth 3-PPPRR XYZ CPM;
Figure 4 illustrates FEA demonstration for the high-bandwidth XYZ CPM under single-axis loading (the uniform colour for the motion stage verifies the minimised parasitic rotation);
Figure 5 illustrates a 3-PPPRR translational parallel manipulator according to a preferred embodiment of the invention; and
Figure 6 illustrates a number of results for stiffness centre demonstration for a parallelogram module.

## Detailed Description of the Drawings

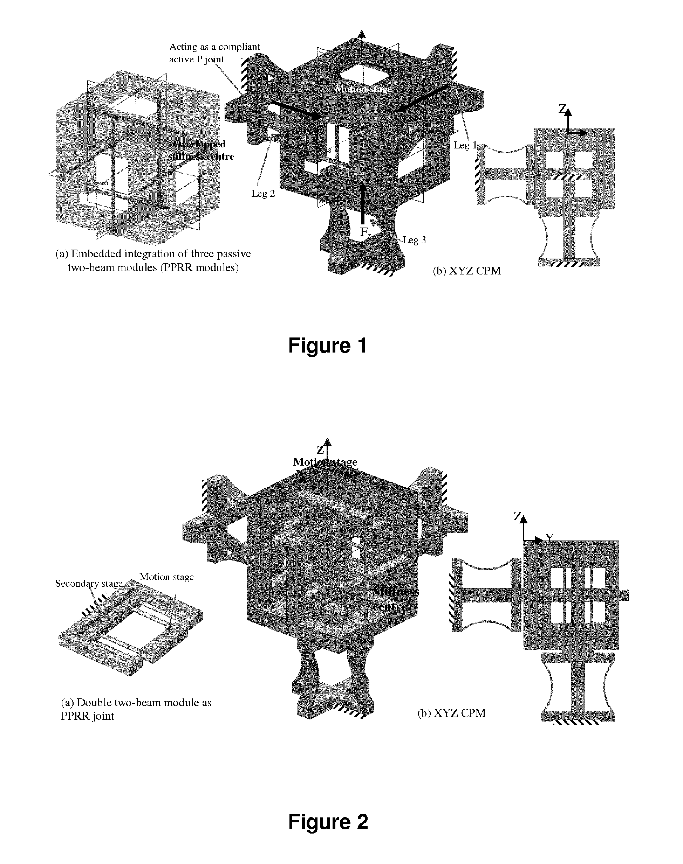

Figure 1 illustrates a 3-PPPRR embedded XYZ CPM with stiffness centre overlapping, according to one embodiment of the invention. The system is based on a 3-PPPRR (P: prismatic joint, R: revolute joint) translational parallel manipulator. The system uses an approach of stiffness centre based to minimise the parasitic rotations such that by appropriate embedded arrangement all the stiffness centres, associated with the passive modules, overlap at a point that all the applied input forces can go through.

Its motion stage is controlled by three linear actuators, mounted on the base, to produce three translations. It is composed of three perpendicular legs. Each leg consists of a compliant active P joint, connected to the based and actuated by a linear actuator, and a compliant passive PPRR chain, connected to the motion stage. Each primary output translation is only affected by the actuation force from the linear actuator along the same direction, which is called the cross-axis decoupling or kinematostatic coupling in CPMs. In addition, sensors are used to measure the input and output displacements.

The following equation shows a diagonal compliance matrix, which is obtained by the normalized modelling method for the invention in Fig. 1 through neglecting the transverse off-axis compliance of active compliant P joints. This indicates that the 3-PPPRR embedded XYZ CPM (Fig. 1) is completely kinematostatically decoupled, and has no parasitic motion under the action of only actuation forces.

$$\mathbf{C}_{\mathrm{cpm}} = 10^{-3} \times \begin{bmatrix} 13.7016 & 0 & 0 & 0 & 0 & 0 \\ 0 & 13.7016 & 0 & 0 & 0 & 0 \\ 0 & 0 & 13.7016 & 0 & 0 & 0 \\ 0 & 0 & 0 & 0.2772 & 0 & 0 \\ 0 & 0 & 0 & 0 & 0.2772 & 0 \\ 0 & 0 & 0 & 0 & 0 & 0.2772 \end{bmatrix}$$

In order to better constrain the cross-axis coupling for the proposed embedded XYZ CPM, an improved embedded XYZ CPM (Fig. 2) can be obtained by using the better compliant double two-beam modules, as described in more detail below.

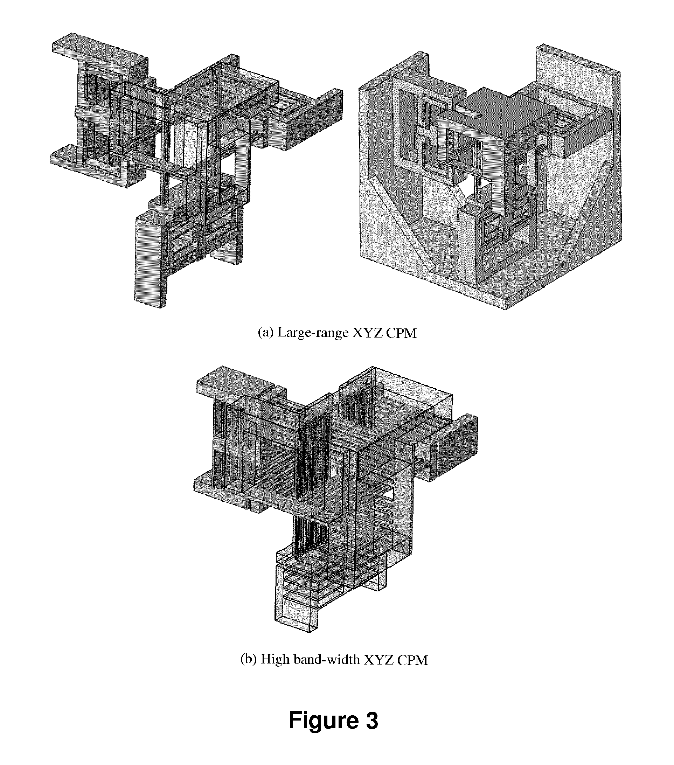

Figure 3 illustrates Real models for EDM fabricating each leg: (a) large-range 3-PPPRR XYZ CPM; and (b) high-bandwidth 3-PPPRR XYZ CPM.

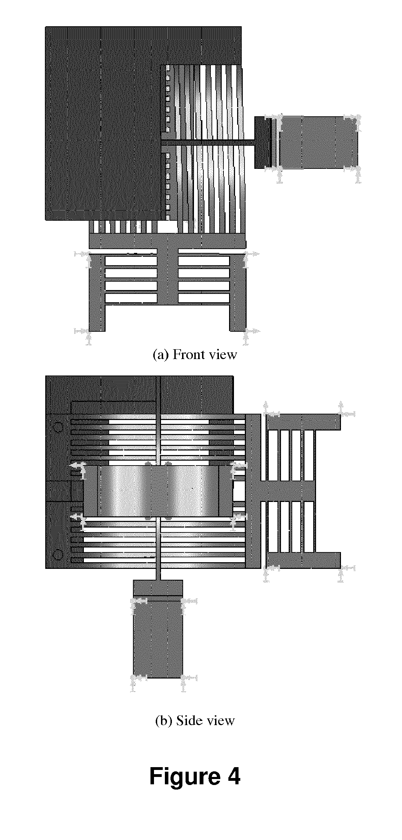

Figure 4 illustrates FEA demonstration for the high-bandwidth XYZ CPM under single-axis loading (the uniform colour for the motion stage verifies the minimised parasitic rotation).

## Large-range-of-motion considerations

A nanopositioning system is a mechatronic motion system capable of nanometric motion quality, which is defined in terms of *precision (motion repeatability), accuracy (lack of error), and resolution (minimum incremental motion).* It comprises a flexure bearing, actuators and drivers, sensors and electronics, and feedback controls implemented on a microcontroller. However, the main drawback of flexure-based nanopositioning systems is that their range has saturated at ~100 um. This is due to the fact the physical components of the system — bearing (compliant mechanisms), actuators, drivers, sensors, electronics, and control hardware — are now well-matched in their capabilities and have been pushed to their individual maximum performance level, for example as discussed in Awtar, S., and Parmar, G., 2010, "Design and a Large Range XY Nanopostioning System", Proceedings of the ASME 2010 International Design Engineering Technical Conferences & Computers and Information in Engineering Conference, August 15 — 18, 2010, Montreal, Quebec, Canada. DETC2010-28185.

Referring to Awtar et al, the following will discuss the selections for compliant mechanisms, actuators and sensors.

## 1. Compliant mechanism requirements:

● **Performance characteristics:** as aforementioned *large-range, decoupled CPMs* are desired for nanopositioning.
● **Material:** selecting the material with high $\sigma_s/E$ ratio, low internal stresses, good strength and phase stability, ease of availability (low cost), and low thermal expansion coefficient. Therefore, AL6061-T651 is chosen.

| Material | Property Young's Modulus E (Gpa) | Poisson' ratio v | Yield Strength $\sigma_s$ (Mpa) | $\sigma_s/E$ |
|---|---|---|---|---|
| Titanium alloy Ti-6Al-4V | 113.8 | 0.342 | 880 | 0.0077 |
| Al alloy 7075 T6 | 72 | 0.33 | 505 | 0.0070 |
| Beryllium copper alloy CuBe2 | 126 | 0.285 | 750 | 0.0060 |
| Al alloy 6061 T6 | 69 | 0.33 | 276 | 0.0040 |
| Steel ASTM A514 | 205 | 0.293 | 690 | 0.0034 |

● **Precision manufacturing method:** noncontact or contact machining. Contact machining such as milling machining; non-contact machining such as laser cutting, water jet and electrical discharging machining (sink or wire EDM). Wire EDM is chosen for two directions' cutting-through.

**2. Actuator requirements for large-range, nanometric resolution and precision.**

**1) Direct-drive linear *electromagnetic* actuators** (voice coil actuators and linear motors) provide large-stroke, nanometric resolution and precision, and are free of any friction and backlash due to non-contact but *cannot* tolerate the off-axis loads or displacements. Most voice coil or similar electromagnetic actuators that provide a direct force source become bulkier with the increased force requirements associated with large ranges of motion.

**a) Voice coil actuators** are the best one for large-range nanopositioning due to hysteresis free, frictionless, cog-free, linear model, and direct control of actuation force. Their resolution is limited by the SINAD (signal to noise and distortion ratio) of the current driver (amplifier), which, however, can be improved by the partially customized low-noise hardware and partially feedback control.
**b) Linear motors** are promising but often suffer from magnetic hysteresis and cogging.

**2) Piezo-electric actuators,** e.g. PZT ceramic stacks, provide high loading, high resolution and precision but *cannot* implement large range of motion and tolerate the off-axis loads or displacements. Although amplifiers can be used in combination with PZT but adversely affect the dynamic performance, lead to relatively low off-axis stiffness and augment the minimum incremental motion of the actuators.

**3) Inchworm style actuators** have repetitive hold-step-release action, provide large range > 100 mm and small step sizes ~10 nm but *cannot* tolerate the off-axis loads or displacements and have inherently impact-induced vibrations even at low speeds.

Therefore, voice coil actuators are the best choice.

**3. Sensor requirements for large-range, nanometric resolution and precision**

**1) Input sensors,** e.g. liner Variable Differential Transducers (LVDTs) and linear optical encoders, have large motion range and nanometric resolution but cannot tolerate the off-axis motion.

**a) LVDTs** have large motion range and non-contact frictionless operation but the resolution is limited by its SINAD or dynamic range of its drive electronics
**b) Linear optical encoders** have no the dynamic range limitation due to its digital output that makes it immune electronic noise and harmonic distortion.
Therefore, linear optical encoders are chosen for input sensing.

**2) Output sensors** are multi-axis sensors that must tolerate the off-axis motion.

**a) Capacitance probes** have nanometric resolution, precision and accuracy, are unique to tolerate large off-axis displacements but suffer from the small 10-100um measurement range. However, the small measurement range issue can be addressed by measuring the small relative motion between the input and output.

**b) Two-axis optical gratings** can produce large-range and multi-axis end-point sensing but no high enough resolution.

**c) Laser interferometry** can produce large-range, high resolution and tolerance of off-axis motion but impractical in desktop (small-size and compact) applications due to its size and set-up.

Therefore, capacitive probes optical encoders are chosen for output sensing.

The XYZ CPM of the present invention shown in Fig. 3(a) can generate *millimetre-level large range of motion* without stress-concentration at a conceptual level (not just changing the thickness and length of beams) since it uses the distributed-compliance and mirror-symmetry DOUBLE parallelogram modules as the active compliant P joint. Especially, the double configuration, a multi-level strategy, can largely alleviate the significant load-stiffening effect in the symmetric configuration for better actuator isolation compared to two mirror-symmetry BASIC parallelogram modules. Here, this load-stiffening effect 1) significantly nonlinearly increases the primary motion stiffness resulting in the use of only small-motion and large-force linear actuators such as PZT actuators, and 2) significantly increases the tensile stress causing the ease of yield under large range of motion. In addition, the distributed-compliance can also result in relatively small primary stiffness to promote the use of large-range voice coil actuators since a larger primary stiffness will require a bulkier voice coil actuator to produce higher peak force.

It should be noted that the XYZ CPM of the present invention can behave well under quasi-statical/low speed motion mode, in which the secondary stages involved in the active double parallelogram modules (Fig. 3(a)) do not vibrate uncontrollably.

However, in another embodiment to run the XYZ CPM in an appreciable speed, a trade-off has to be made between good characteristics, such as large range of motion achieved through the use of the double parallelogram modules involving the secondary stages, and the uncontrollable vibration mentioned above. Therefore, from the good dynamics point of view, the number of non-controllable motion mass should be reduced as possible as one can, which suggests that each passive compliant PPRR joint, connected to the motion stage, in each leg has no non-controllable motion mass.

## Dynamics considerations

From the dynamic equation, it is clear that it is possible to reduce the mass or increase the stiffness to raise the modal frequencies for improving the dynamic performance of the proposed XYZ CPMs. Therefore, it is possible to further increase the beam number (elasticity average, as shown in Fig. 3(b)) to raise the primary stiffness (therefore the first natural frequency) without affecting the maximal motion range only in the active compliant P joints. Usually, it is preferred to only increase the beam number in the active joints to result in better actuator isolation performance. In addition to the above measures, one may also improve the dynamic performance by using a high-order controller to achieve a high bandwidth greater than the first natural frequency.

It is noted that under-constrained secondary stages involved in the compliant joints, as previously discussed, should be avoided in the high-frequency XYZ CPMs (Fig. 3(b)), which can undergo free vibration along the unconstrained directions.

Due to the fact that the high-frequency requires high stiffness, and a larger primary stiffness then requires a bulkier voice coil actuator to produce higher peak force, as a result for the high-frequency nanopositioning, the PZT has to be used to produce large-force but relatively small motion range. Therefore, there is always a contradiction between high-frequency and large-range motion in nanopositioning systems.

## 3-PPPRR translational parallel manipulator Embodiment

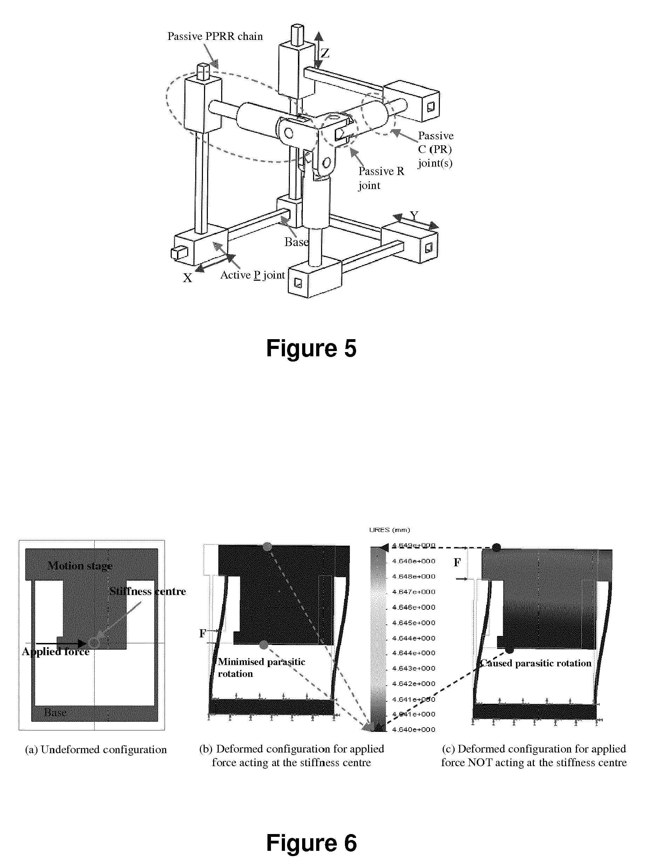

Figure 5 illustrates a kinematically decoupled 3-PPPRR translational parallel manipulator (TPM) available as the PRBM to construct XYZ CPMs, according to a preferred embodiment of the invention. The three planes associated with the passive PPRR kinematic chains are orthogonal to produce the kinematic decoupling, and all the R joints are inactive. Each actuated P joint is arranged to be perpendicular to the passive PPRR plane in each leg so that the configuration of the resulting 3-DOF TPMs can be used to construct kinematostatically decoupled XYZ CPMs.

It is noted that a kinematically decoupled TPM does not sufficiently lead to a kinematostatically decoupled XYZ CPM. Therefore, an XYZ CPM can be obtained by replacing the active P joint and the passive PPRR chain in each leg of the 3-PPPRR TPM (Fig. 5) with a suitable active compliant P joint and a suitable passive compliant PPRR module, respectively.

**Stiffness centre**

The stiffness centre refers to a point through which an actuation force, parallel to the primary motion, is applied on the motion stage of a compliant module to  produce the primary translation and minimize any parasitic rotation. The indicated stiffness centre of a parallelogram module is shown in Fig. 6, which are the symmetric centres of all compliant beams.

It will be appreciated that the XYZ CPM of the present invention can be used in a variety of commercial applications such as Scanning Tables for AFM/SFM, Nano-Positioners/Motion Stages, Bio-Cell Injectors, Adjusting Mounting, and Precision (optical/fibre) Alignment Devices, which can be found from existing references and the websites of several big companies such as PI (physikinstrumente), THORLABS, Mad City, and Elliot Scientific.

In the specification the terms "comprise, comprises, comprised and comprising" or any variation thereof and the terms include, includes, included and including" or any variation thereof are considered to be totally interchangeable and they should all be afforded the widest possible interpretation and vice versa.

The invention is not limited to the embodiments hereinbefore described but may be varied in both construction and detail.

**Claims**

1.  A compliant parallel manipulator system comprising:

    a motion stage controlled by three linear actuators, mounted on a base adapted to produce three output translations,
    **characterised by**
    three leg support portions, each leg comprising a compliant active P joint,
    connected to the base and adapted to be actuated by a linear actuator,
    and a chain connected to the motion stage.

2.  The system of claim 1 wherein each primary output translation is only affected by the actuation force from the linear actuator along the same line of direction.

3.  The system of claims 1 or 2 comprising at least one sensor to measure input and/or output displacements.

4.  The system of any preceding claim wherein each actuated P joint is arranged substantially perpendicular to a passive PPRR plane in each leg.

5.  The system of any preceding claim wherein the system comprises a kinematically decoupled 3-PPPRR translational parallel manipulator (TPM).

6.  The system of any preceding claim wherein the chain comprises a compliant passive PPRR chain.

Acting as a compliant
active P joint

Motion stage

Overlapped
stiffness centre

Leg 1

Leg 2

$F_z$

Leg 3

Z

Y

(a) Embedded integration of three passive
two-beam modules (PPRR modules)

(b) XYZ CPM

## Figure 1

Z

Motion stage

Secondary stage    Motion stage

Stiffness
centre

Z

Y

(a) Double two-beam module as
PPRR joint

(b) XYZ CPM

## Figure 2

(a) Large-range XYZ CPM

(b) High band-width XYZ CPM

# Figure 3

(a) Front view

(b) Side view

# Figure 4

Figure 5

(a) Undeformed configuration

(b) Deformed configuration for applied force acting at the stiffness centre

(c) Deformed configuration for applied force NOT acting at the stiffness centre

Figure 6

Europäisches
Patentamt

European
Patent Office

Office européen
des brevets

# EUROPEAN SEARCH REPORT

Application Number

EP 12 17 4050

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | QINCHUAN LI ET AL: "Structural Shakiness of Nonoverconstrained Translational Parallel Mechanisms With Identical Limbs", IEEE TRANSACTIONS ON ROBOTICS, IEEE SERVICE CENTER, PISCATAWAY, NJ, US, vol. 25, no. 1, 1 February 2009 (2009-02-01), pages 25-36, XP011332805, ISSN: 1552-3098, DOI: 10.1109/TRO.2008.2006869 * paragraph [II.E]; figures 4,13 * ----- | 1-6 | INV. B25J7/00 B25J17/02 |
| X | ZHONGFEI WANG ET AL: "A family of spatial translational parallel robots", INTELLIGENT CONTROL AND AUTOMATION, 2008. WCICA 2008. 7TH WORLD CONGRESS ON, IEEE, PISCATAWAY, NJ, USA, 25 June 2008 (2008-06-25), pages 2326-2332, XP031301252, ISBN: 978-1-4244-2113-8 * page 2326 - page 2328 * ----- | 1-6 | |
| | | | TECHNICAL FIELDS SEARCHED (IPC) |
| X | QINCHUAN LI ET AL: "Parallel Mechanisms With Bifurcation of Schoenflies Motion", IEEE TRANSACTIONS ON ROBOTICS, IEEE SERVICE CENTER, PISCATAWAY, NJ, US, vol. 25, no. 1, 1 February 2009 (2009-02-01), pages 158-164, XP011332814, ISSN: 1552-3098, DOI: 10.1109/TRO.2008.2008737 * paragraph [II.C]; figure 2 * ----- | 1-6 | B25J B23Q |

-/--

The present search report has been drawn up for all claims

| Place of search | Date of completion of the search | Examiner |
|---|---|---|
| Munich | 10 December 2012 | Grenier, Alain |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

& : member of the same patent family, corresponding
document

EPO FORM 1503 03.82 (P04C01)

Europäisches
Patentamt
European
Patent Office
Office européen
des brevets

# EUROPEAN SEARCH REPORT

Application Number

EP 12 17 4050

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | GOGU G: "Singularity-free fully-isotropic parallel manipulators with Schonflies motions", ADVANCED ROBOTICS, 2005. ICAR '05. PROCEEDINGS., 12TH INTERNATIONAL CONFERENCE ON SEATLE, WA, USA JULY 18-20, 2005, PISCATAWAY, NJ, USA,IEEE, 18 July 2005 (2005-07-18), pages 194-201, XP010836925, DOI: 10.1109/.2005.1507412 ISBN: 978-0-7803-9178-9 * the whole document * ----- | 1-6 | |
| A | QINGSONG XU ET AL: "Novel design of a totally decoupled flexure-based XYZ parallel micropositioning stage", ADVANCED INTELLIGENT MECHATRONICS (AIM), 2010 IEEE/ASME INTERNATIONAL CONFERENCE ON, IEEE, PISCATAWAY, NJ, USA, 6 July 2010 (2010-07-06), pages 866-871, XP031855698, ISBN: 978-1-4244-8031-9 * the whole document * ----- | 1-6 | TECHNICAL FIELDS SEARCHED (IPC) |

The present search report has been drawn up for all claims

| Place of search | Date of completion of the search | Examiner |
|---|---|---|
| Munich | 10 December 2012 | Grenier, Alain |

EPO FORM 1503 03.82 (P04C01)

## REFERENCES CITED IN THE DESCRIPTION

**Patent documents cited in the description**

- US 4635887 A

**Non-patent literature cited in the description**

- **LI, Y. ; XU, Q.** A Totally Decoupled Piezo-Driven XYZ Flexure Parallel Micropositioning Stage for Micro/Nanomanipulation. *IEEE Transactions on Automation Science and Engineering,* 2011, vol. 8 (2), 265-279
- **YUE, Y. ; GAO, F. ; ZHAO, X. ; GE, Q.** Relationship among Input-Force, Payload, Stiffness and Displacement of a 3-DOF Perpendicular Parallel Micro-Manipulator. *Mechanism and Machine Theory,* 2010, vol. 45 (5), 756-771
- **AWTAR, S. ; USTICK, J. ; SEN, S.** An XYZ Parallel Kinematic Flexure Mechanism with Geometrically Decoupled Degrees of Freedom. *Proceedings of the ASME 2011 International Design Engineering Technical Conferences & Computers and Information in Engineering Conference,* 29 August 2011
- **YUN, Y. ; LI, Y.** Optimal Design of a 3PUPU Parallel Robot with Compliant Hinges for Micromanipulation in a Cubic Workspace. *Robotics and Computer-Integrated Manufacturing,* 2011, vol. 27 (6), 977-985
- **AWTAR, S. ; PARMAR, G.** Design and a Large Range XY Nanopostioning System. *Proceedings of the ASME 2010 International Design Engineering Technical Conferences & Computers and Information in Engineering Conference,* 15 August 2010